# EUROPÄISCHE PATENTANMELDUNG

(11) **EP 3 553 866 A1**
(43) Veröffentlichungstag der Anmeldung: **16.10.2019**
(21) Anmeldenummer: 18167304.7
(22) Anmeldetag: 13.04.2018
(51) Int. Cl.: H01M 8/18, H01M 4/90, C25B 11/16, H01M 8/1018

(54) **KATALYSATORMATERIAL FÜR EINE BRENNSTOFFZELLE, SOWIE HERSTELLUNGSVERFAHREN**

(71) Anmelder: Technische Universität Berlin, 10623 Berlin (DE)
(72) Erfinder: Dresp, Sören, 10315 Berlin (DE); Klingenhof, Malte, 12203 Berlin (DE); Strasser, Peter, 10629 Berlin (DE)
(74) Vertreter: Gulde & Partner

(57) **Zusammenfassung**

Katalysatormaterial für eine Brennstoffzelle und ein Elektrolysesystem, sowie Herstellungsverfahren

Die Erfindung betrifft ein Mehrkomponenten-Katalysatormaterial zur Verwendung in einer Brennstoffzelle, Elektrolysesystem und einer regenerativen Brennstoffzelle bzw. reversiblen Elektrolyseurs.

Es ist vorgesehen, dass das Katalysatormaterial ein Übergangsmetalloxid, eine NiFe-Interkalationsverbindung und ein leitfähiges Trägermaterial umfasst.

## Beschreibung

Die Erfindung betrifft ein Katalysatormaterial für die Nutzung als Elektrode in einer regenerativen Brennstoffzelle bzw. einer reversiblen Elektrolysezelle mit einem solchen, sowie ein Verfahren zu dessen Herstellung.

Die Nachfrage nach sauberen und erneuerbaren Energiespeichern und -Umwandlungssystemen für mobile und stationäre Anwendungen steigt rasant. Eine regenerative Brennstoffzelle (engl.: Unitized Regenerative Fuel Cell (URFC)), ein Hybrid aus Elektrolyseur und Brennstoffzelle, bietet die Möglichkeit, Energie aus erneuerbaren Energiequellen (Solar-/Windkraftwerke) durch elektrochemische Spaltung von Wasser in Form von molekularem Wasserstoff zu speichern und bei Bedarf in elektrische Energie rückumzuwandeln. Wasser ist das einzige Nebenprodukt dieses Prozesses. Dies bietet die Möglichkeit, produzierte Überschussenergie umweltschonend zu speichern und bei Bedarf bereitzustellen. Dieser Prozess kann die Emission von Treibhausgasen (THG) bedeutend reduzieren und so einen wichtigen Beitrag zur Energiewende darstellen. Die Leistungsfähigkeit von Elektrolyseursystemen, Brennstoffzellen oder modularen regenerativen Brennstoffzellen hängt jedoch stark von der Geschwindigkeit (Kinetik) der ablaufenden elektrochemischen Reaktionen ab. Diese Reaktionen sind zum einen die Sauerstoff umwandelnden Prozesse (Sauerstoffprozesse) Sauerstoffevolutionsreaktion (engl.: Oxygen Evolution Reaction, OER) und Sauerstoffreduktionsreaktion (engl.: Oxygen Reduction Reaction, ORR) sowie die Wasserstoff umsetzenden Prozesse (Wasserstoffprozesse) an der Wasserstoffelektrode: Wasserstoffoxidationsreaktion (engl.: Hydrogen Oxidation Reaction, HOR) und die Wasserstoffevolutionsreaktion (engl.: Hydrogen Evolution Reaction, HER). Da es sich bei den Wasserstoffreaktionen um vergleichsweise einfache Zweistufenreaktionen handelt, werden die Gesamtprozesse durch die vergleichsweise schlechte Kinetik der vierstufigen elektrochemischen Sauerstoffreaktionen limitiert.

Aufgrund der Komplexität der genannten Sauerstoffprozesse bedarf es eines katalytischen Systems, welches OER und ORR effizient mit möglichst geringen Verlusten über lange Zeiträume katalysieren kann, um eine wettbewerbsfähige Alternative zu etablierten Energieträgern zu schaffen.
Die besten OER- und ORR-Katalysatoren unter sauren Bedingungen basieren auf Edelmetallen und deren Oxiden. Während Materialien auf der Basis von Iridium und Ruthenium am häufigsten in sauren Membran basierten Elektrolyseursystemen (engl.: Proton Exchange Membrane Water Electrolyzer, PEMWE) verwendet werden, sind Platinlegierungen die besten Katalysatoren für Brennstoffzellenanwendungen in saurem Milieu. Der Nachteil dieser Materialien ist ihr geringes Vorkommen verbunden mit hohen Kosten, wodurch eine breitere Anwendung ausgeschlossen wird. Katalysatoren, die ausschließlich auf reichlich vorkommenden Übergangsmetalloxiden oder funktionalisierten Kohlenstoffen basieren, bieten vielversprechende Alternativen für zukünftige Aufgaben. Die Charakterisierung von Übergangsmetallkatalysatoren für die OER und die ORR ist daher ein wichtiger und aktueller Forschungsschwerpunkt.

Es hat sich herausgestellt, dass vor allem Interkalationsverbindungen bestehend aus Nickel und Eisen besonders effiziente OER-Katalysatoren sind. Besonders hervorzuheben sind NiFe Verbindungen, welche als layered double hydroxide (LDH) vorliegen. Dresp et al. (S. Dresp, F. Luo, R. Schmack, S. Kühl, M. Gliech and P. Strasser, Energy Environ. Sc., 2016, 9, 2020-2024) zeigten, dass NiFe-LDH als OER-aktive Komponente in einem bifunktionellen Zweikomponenten-Katalysatorsystem geeignet ist. Leider zeigte das benannte System enorme Aktivitätsverluste während elektrochemischer Belastungstests, die auf die durch die hohen OER Potentiale verursachte Degradation der ORR-aktiven kohlenstoffbasierten Spezies zurückzuführen ist. Die Aktivität der OER-aktiven Komponente wurde dadurch nicht eingeschränkt. Für einen bifunktionellen Katalysator für die Anwendung in einer regenerativen Brennstoffzelle wird neben NiFe-LDH eine zweite hinreichend stabile ORR-aktive Komponente benötigt, da NiFe-LDH keine hinreichende ORR Aktivität besitzt.

Manganoxide, besonders Perovskite (Mn₂O₃) und Cryptomelan-Typ Oxide (MnO₂) zeigen ORR-Aktivitäten in alkalischen Medien, vergleichbar mit kommerziellem Pt/C. Die Nachteile dieser Oxide resultieren aus der Größe der Materialien kombiniert mit einer geringen Oberfläche, sowie einer schlechten elektrischen Leitfähigkeit. Diese Nachteile erfordern Modifikationen des Metalloxids und die Verwendung eines geeigneten, leitfähigen Trägermaterials mit großer Oberfläche. Die gebräuchlichsten Trägermaterialien sind "Carbon Blacks" wie Vulcan XC-72R, Graphen oder Carbon Nanotubes (CNT). Derartige Trägermaterialien führen aber im Hinblick auf dessen Kohlenstoffkorrosion, welche bei OER relevanten-Potentialen auftreten kann, zu einer signifikanten Destabilisierung des Katalysatormaterials. Entsprechend sind solche Katalysatorsysteme in einem bifunktionellen Sauerstoff-Elektrodensystem durch geringe Langzeitstabilitäten eingeschränkt.
Die Kombination eines auf die Katalyse der ORR spezialisierten Materials mit einem auf die Katalyse der OER spezialisierten Materials führt zu einem neuen Katalysatorsystem, welches idealerweise die vorteilhaften katalytischen Eigenschaften des jeweils spezialisierten Materials zeigt. Allerdings werden in der Regel auch die Nachteile der jeweiligen Materialien importiert. Dadurch ist es extrem schwierig zwei Materialien zu finden, welche eine der genannten Reaktionen aktiv katalysieren und unter den gänzlich anderen Bedingungen der Rückreaktion eine ausreichende Stabilität aufweisen. Dies ist unseres Wissens nach dem Stand der Technik noch nicht gelungen.

Der Erfindung liegt nun die Aufgabe zugrunde, die Probleme des Standes der Technik zu vermeiden. Insbesondere soll ein Katalysatormaterial für eine Elektrode in einer Brennstoffzelle, einem Elektrolyseur oder einer Metall-Luft-Batterie bereitgestellt werden, die sowohl eine sauerstoffumsetzende Reaktion, als auch eine sauerstofferzeugende Reaktion katalysiert. Darüber hinaus sollte die bereitgestellte Elektrode eine hohe Langzeitstabilität, insbesondere im Vergleich zu herkömmlichen Elektroden aufweisen.

Diese Aufgabe wird durch ein Katalysatormaterial für eine regenerative Brennstoffzelle oder reversiblen Elektrolyseur, eine Elektrode bzw. eine regenerative Brennstoffzelle mit einem solchen sowie ein Verfahren zu deren Herstellung mit den Merkmalen der unabhängigen Ansprüche gelöst.

Somit betrifft ein erster Aspekt der Erfindung ein Katalysatormaterial für eine regenerative Brennstoffzelle oder reversiblen Elektrolyseur, umfassend ein Mehrkomponentensystem aufweisend ein dotiertes Übergangsmetalloxid, eine NiFe-Interkalationsverbindung sowie ein leitfähiges kohlenstoffhaltiges Trägermaterial.

Die vorliegende Erfindung stellt ein bifunktionelles Katalysatormaterial zur Verfügung, das in der Lage ist, die Sauerstoffreduktionsreaktion (ORR) und die Sauerstoffentstehungsreaktion (OER) in modularen regenerativen Brennstoffzellen (URFC), reversiblen Elektrolyseuren oder Metallluftbatterien gleichermaßen zu katalysieren. Das Material umfasst im Gegensatz zu herkömmlichen Katalysatormaterialien für Brennstoffzellen und Elektrolyseuren zwei Elektrokatalysatoren, die jeweils selektiv eine der Sauerstoffreaktionen an einer Sauerstoffelektrode katalysieren. Mit anderen Worten, durch die vorliegende Kombination beider Elektrokatalysatoren ist die Oxidation von Wasser und die Reduktion von Sauerstoff gleicharmaßen aktiv. Das zusätzliche Trägermaterial verbessert die Gesamtleitfähigkeit und steigert die Aktivität.
Das Kupfer dotierte Manganoxid katalysiert selektiv die Reduktion von Sauerstoff (ORR), wohingegen die NiFe-Interkalationsverbindung selektiv die Sauerstoffentstehungsreaktion (OER) katalysiert. Überraschenderweise wird durch die Kombination der beiden spezialisierten Katalysatorbestandteile, die jeweilige Selektivität und Aktivität nicht signifikant beeinträchtigt.

Die bifunktionelle Aktivität des erfindungsgemäße Katalysatormaterials ist bemerkenswert gut. Im Gegensatz zum üblichen Ansatz der Aktivitätsmaximierung durch Vergrößerung der Oberfläche (sehr kleine Nanopartikel) weist das erfindungsgemäße Katalysatormaterial bevorzugt vergleichsweise große Partikel und damit kleine Oberflächen auf. Das Manganoxid formt vorzugsweise rutenförmige Partikel, welche eine durchschnittliche Partikelgröße vorzugsweise 100 x 15 x 15 nm aufweisen und die NiFe-Interkalationsverbindung formt bevorzugt kleine dünne Plättchen mit einem Durchmesser im Bereich von 10-500 nm. Übliche Edelmetall basierte Referenzkatalysatoren weisen einen Durchmesser von 1 - 5 nm auf. Somit sind beide Materialien vergleichbar große Elektrokatalysatoren. Außerdem haben NiFe-Interkalationsverbindungen die Tendenz, die aktive Oberfläche durch Abdeckung der reaktiven Grenzfläche des Katalysators zu minimieren. Daher sind die gleichzeitig hohen ORR- und OER-Aktivitäten überraschend. Die Stabilität des erfindungsgemäßen Katalysatormaterials ist ebenso erstaunlich, da eine Kohlenstoffkomponente enthalten ist. Aufgrund der erwähnten Kohlenstoffkorrosion führt das in den meisten Fällen zu einer drastischen Verschlechterung der Aktivität über längere Zeiträume, während sie in dem erfindungsgemäßen System erhalten bleibt.

Demnach zeigte sich, dass das erfindungsgemäße Katalysatormaterial eine überraschend geringe Degradation durch Katalysatorkorrosion, insbesondere eine geringe Neigung zur Kohlenstoffkorrosion im Trägermaterial aufweist. Dies führt zu einer deutlich höheren Langzeitstabilität des Katalysatormaterials verglichen zu bekannten Systemen.

In bevorzugter Ausgestaltung der Erfindung ist vorgesehen, dass das dotierte Übergangsmetalloxid ein mit einem Dotanden M dotiertes Manganoxid ist. Manganoxid ist als Basismaterial besonders kostengünstig und zeigt insbesondere als α-Manganoxid, beispielsweise im Cryptonmelan-Typ, bemerkenswerte ORR-Aktivitäten. Somit ist es besonders bevorzugt, dass das Übergangsmetalloxid der Formel M-α-MnO₂ entspricht.

Der Dotand M ist ausgewählt aus der Gruppe Nickel, Kupfer, Silber und/oder Kobalt. Diese Gruppe der Dotanden erwies sich als besonders geeignet, um die Aktivität des Katalysatormaterials bei Sauerstoffreduktionsreaktionen zu erhöhen.

In weiterer bevorzugter Ausgestaltung der Erfindung ist vorgesehen, dass der Dotand zu einem Gewichtsanteil zwischen 0,1-2,5 Gew.-%,bezogen auf das Manganoxid, enthalten ist. Eine Dotierung des Übergangsmetalloxids in diesen Bereichen zeigte sich insbesondere bei der oben genannten Gruppe möglicher Dotanden als vorteilhaft in Bezug auf die Aktivität und die Stabilität des dotierten Übergangsmetalloxids bei gleichzeitiger Maximierung der selektiven Katalyse der Sauerstoffreduktionsreaktion.

Mit besonderem Vorteil liegt die NiFe-Interkalationsverbindung als Layered Double Hydroxide (LDH) vor. NiFe-LDH zeigt eine hohe Aktivität bei der Katalyse von Sauerstoffentwicklungsreaktionen und zeichnet sich darüber hinaus durch seine hohe Selektivität und Stabilität aus.

LDH sind eine Klasse ionischer Feststoffe, die durch eine Schichtstruktur mit der generischen Abfolge [AcBZAcB]ₙ ausgezeichnet ist. Dabei definiert c Schichten von Metallkationen, wobei A und B Schichten von Hydroxid (HO-eine Ionen) und Z Schichten anderer eine Ionen und neutrale Moleküle (wie beispielsweise Wasser) darstellen. Seitliche Versätze zwischen den Lagen können zu längeren Wiederholungsperioden führen. Die interkalierten Anionen (Z) sind schwach gebunden und oft austauschbar. Vorliegend sind Eisen und Nickel divalente und trivalente Kationen, die in einer positiven Schicht c zwischen anionischen oder neutralen Hydroxidschichten angeordnet sind. Hierbei handelt es sich um eine Interkallationsverbindung des Hydrotalcit-Typs. Besonders bevorzugt sind Nickel und Eisen im molaren Verhältnis von 3 : 1 bis 5 : 1 in der NiFe-Interkalationsverbindung vorliegend. Die angegebenen Anteile beziehen sich auf molare Anteile gemessen über ICP-OES. Da allerdings die molaren Massen sehr ähnlich sind, sind die Unterschiede zu den Gewichtsanteilen gering.

In weiterer bevorzugter Ausgestaltung der Erfindung ist vorgesehen, dass das leitende Trägermaterial auszuwählen ist aus partikulärem Kohlenstoff, so genanntem *Carbon Black,* Graphen, nanostrukturiertem Kohlenstoff, Kohlenstoffnanoröhrchen und/oder karbonisiertem Trägermaterial. Diese Materialien zeigen optimale elektrische Leitfähigkeiten und justierbare Oberflächengrößen und sind daher als Trägermaterial für das Übergangsmetalloxid und/oder die Interkalationsverbindung besonders geeignet. Im erfindungsgemäßen Katalysatormaterial dient das Trägermaterial insbesondere als Substrat für das Übergangsmetalloxid, welches sich demgemäß auf der Oberfläche des Trägermaterials anlagert. Damit werden die Nachteile der meisten Übergangsmetalloxide, insbesondere der Cryptomelane, die sich in kleinen Dimensionen und damit verbunden niedriger Oberfläche zeigen, überwunden bzw. neutralisiert. Zudem wird eine Aggregation der katalytisch aktiven Substanz, ebenso wie ein Austrag dieser aus dem System, verhindert.

Mit besonderem Vorteil liegt ein Gewichtsverhältnis zwischen Übergangsmetalloxid, Interkallationsverbindung und Trägermaterial im Bereich von 1:1:1 bis 3:3:1. In diesem Bereich konnte die oben bereits beschriebene vergleichsweise geringe aktive Oberfläche, insbesondere eine geringe freie Oberfläche des Trägermaterials, im erfindungsgemäßen Katalysatormaterial mit den sich daraus ergebenden unerwarteten Vorteilen bezüglich Langzeitstabilität des Katalysatormaterials bei Verwendung in einer Elektrode, besonders gut generiert werden.

Ein weiterer Aspekt der Erfindung betrifft eine Elektrode, insbesondere eine Sauerstoffelektrode für eine Brennstoffzelle, die das erfindungsgemäße Katalysatormaterial aufweist. Ferner betrifft die Erfindung eine Brennstoffzelle aufweisend eine lonenaustauschmembran, die zumindest einseitig mit dem erfindungsgemäßen Katalysatormaterial beschichtet ist.

Darüber hinaus betrifft die Erfindung ein Verfahren zum Herstellen des erfindungsgemäßen Katalysatormaterials. Das erfindungsgemäße Verfahren umfasst das Bereiten einer Mischung aus dem dotierten Übergangsmetalloxid, der Interkallationsverbindung sowie dem leitfähigen Trägermaterial durch physikalische Vermengung der Ausgangsmaterialien in Pulver- oder partikulärer Form, wobei die Partikel bevorzugt Nanopartikel sind, also mittlere Partikelgrößen im Bereich von 1 bis 100 nm aufweisen. Zum Bereiten einer Katalysatortinte, in Form einer Katalysatordispersion, wird die Mischung unter Zugabe von hochreinem Wasser, *iso*-Propanol sowie optional einem Bindemittel suspendiert. Die Suspension wird vorzugsweise durch Ultraschallanwendungen unterstützt. Das hochreine Wasser hat einen Wiederstand von mindestens 17 MΩ, vorzugsweise 18,2 MΩ oder mehr.
Anschließend wird die erhaltene Katalysatortinte durch übliche Verfahren auf einem Substrat aufgetragen. Nachdem die Lösungsmittel abgedampft sind, verbleibt das erfindungsgemäße Katalysatormaterial mit Binder auf dem Substrat.

Als Bindemittel wird bevorzugt ein perfluoriertes Sulfonsäurepolymer, insbesondere Nafion®, eingesetzt. Im Vergleich zu anderen Bindemitteln haben diese den Vorteil, dass es ionische Eigenschaften aufweisen und somit die Leitfähigkeit des Katalysatormaterials nicht herabsetzen. Darüber hinaus zeichnen sich perfluorierte Sulfonsäurepolymere durch hohe Betriebstemperaturen im Vergleich zu anderen Polymeren aus.

Im Falle langsamer Verfahren der Auftragung der Katalysatortinte auf ein Substrat sind folgenden Verhältnisse bevorzugt. Mit besonderem Vorteil ist Wasser zu 70-80 Gew.-%, *iso-*Propanol mit 15-35 Gew.-% und Bindemittel von 0-5 Gew.-% insbesondere von 2-5 Gew.-% bezogen auf die Summe der Komponenten Wasser, *iso*-Propanol und Bindemittel in der Suspension enthalten. Besonders bevorzugt liegen sie in einem Verhältnis von 76,8 : 20 : 3,2 Gew.-% vor. Die Lösungsmittelverhältnisse sowie Verhältnisse zwischen Katalysator und Bindemittel können auf ein schnelleres Beschichtungsverfahren wie folgt angepasst werden. Mit besonderem Vorteil liegt Wasser von 0.5-5 Gew.-%, *iso*-Propanol mit 95-99.5 Gew.-%, bezogen auf die Summe der Komponenten Wasser und *iso*-Propanol vor. Katalysator und Bindemittel werden in einem Verhältnis zwischen 5 : 3 und 7 : 3 zu dem genannten Lösungsmittelgemisch hinzugefügt. Innerhalb der oben angegebenen Anteilsbereiche zeigen die bereitgestellten Katalysatortinten eine besonders gleichmäßige Verteilung und gute Suspensionsfähigkeit der Partikel (Übergangsmetalloxid, Interkallationsverbindung, Trägermaterial), sowie einen optimalen Kompromiss aus zügigem und schonendem Abdampfen der Lösungsmittel. Das vorliegende Verhältnis zwischen organischer Komponenten und Wasser zeigte eine hohe physikalische Stabilität und Haftung des Katalysatormaterials bzw. der Katalysatorschicht.

Das mit dem erfindungsgemäßen Katalysatormaterial beschichtete Substrat findet vorzugsweise als Elektrode, insbesondere als Sauerstoffelektrode, in einer Brennstoffzelle, einem Elektrolyseur einer Batterie oder einer regenerativen Brennstoffzelle bzw. reversiblen Elektrolyseur Verwendung.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: XRD-Diffraktogramm von mit Kobalt, Nickel, Kupfer und Silber dotiertem alpha Mangan(IV)oxid sowie eine pures alpha Mangan(IV)oxid,
- Figur 2: eine graphische Gegenüberstellung elektrochemischer RDE-Messungen einiger mit Kobalt, Nickel, Kupfer und Silber dotiertem alpha Mangan(IV)oxid,
- Figur 3: eine graphische Darstellung zyklischer Voltammogramme des erfindungsgemäßen Katalysatormaterials im Vergleich mit den Einzelkomponenten, sowie edelmetallbasierten Referenzkatalysatoren,
- Figur 4: eine graphische Darstellung zyklischer Voltammogramme nach elektrochemischer Stabilitätstestung des erfindungsgemäßen Katalysatormaterials im Vergleich mit den Einzelkomponenten, sowie edelmetallbasierten Referenzkatalysatoren,
- Figur 5: eine graphische Darstellung eines galvanostatischen Stabilitätstests an einer rotierenden Scheibenelektrode,
- Figur 6: eine schematische Schnittansicht einer modular regenerierenden Brennstoffzelle (URFC) in einer bevorzugten Ausgestaltung der Erfindung.

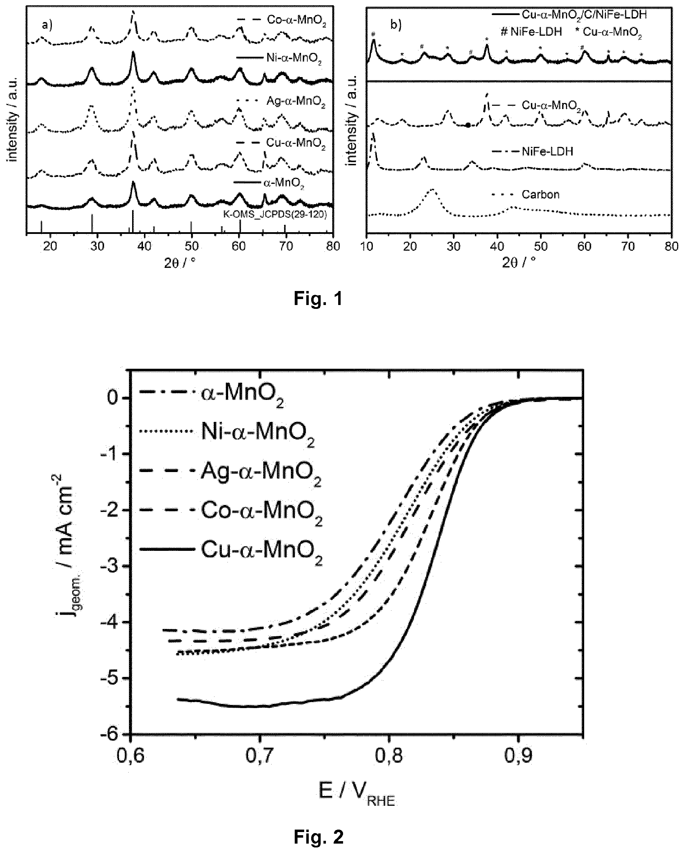

Figur 1 zeigt a) XRD-Diffraktogramme verschiedener Kryptomelan-Mangan-Oxide (α-MnO₂) und modifizierte Manganoxide vom Kryptomelan-Typ (M-α-MnO₂, M = Cu, Ni, Ag, Co). Die Kristallstruktur des resultierenden Manganoxids wird durch die Metalldotierungen nicht beeinflusst. Dies lässt den Schluss zu, dass die Menge der Dotierstoffe durch die eingesetzte Synthese drastisch erhöht werden kann. In Teil b) der Figur 1 sind XRD-Diffraktogramme der einzelnen Komponenten des Drei-Komponenten-Systems, sowie das Drei-Komponenten-System dargestellt.

Ergebnisse elektrochemischer RDE Messungen in Sauerstoff gesättigter 0,1 M KOH, bei 5 mV s⁻¹, 1600 U/min und einer Katalysatorbeladung von 203,72 µg cm⁻² sind in Figur 2 gezeigt. Die Figur zeigt die ORR-Aktivitäten verschiedener Manganoxide des Kryptomelan-Typs (M-α-MnO₂, M = Cu, Ni, Ag, Co). Wie in Figur 2 dargestellt, hat Cu-α-MnO₂ das positivste Potential bei -3 mA cm⁻² und die höchsten Diffusionsgrenzströme, daher kann Cu-α-MnO₂ unter den untersuchten Materialien als das aktivste Material angesehen werden und wird für die weiterführenden Messung des erfindungsgemäßen Katalysators zugrunde gelegt.

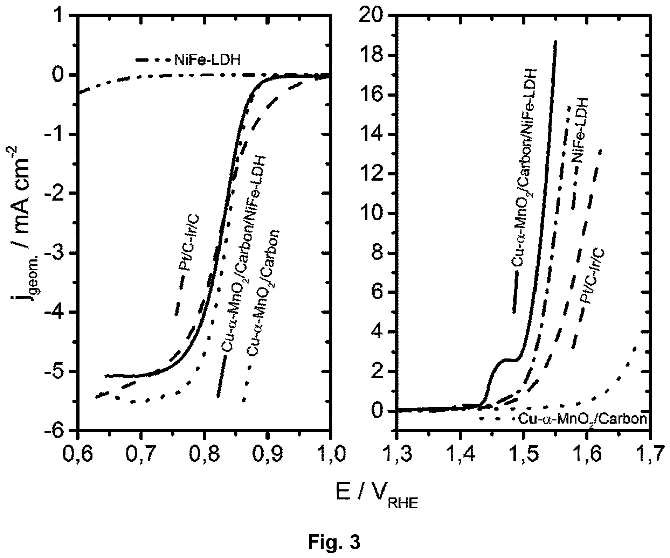

In Figur 3 sind zwei Diagramme gezeigt, welche a) ORR- und b) OER-Aktivitäten von NiFe-LDH, Pt/C-Ir/C, Cu-α-MnO₂/Carbon und physikalisch gemischtem Cu-α-MnO₂/Carbon/NiFeLDH zeigen. Den Graphen ist zu entnehmen, dass das erfindungsgemäße Übergangsmetalloxidbasierte System den als Referenz verwendeten kommerziellen Katalysator in Bezug auf ORRsowie OER-Aktivität übertrifft. Die ORR-Aktivität des Manganoxids wird durch die Zugabe von NiFe-LDH nur geringfügig beeinflusst, während die OER-Aktivität drastisch gesteigert wird.

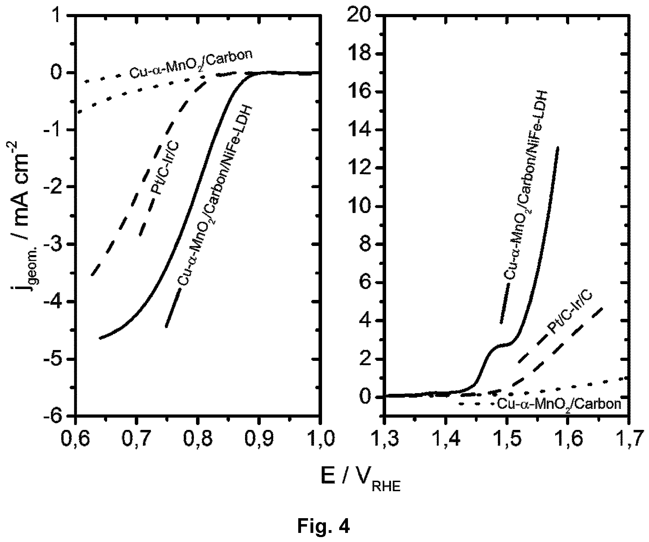

Figur 4 zeigt a) ORR und b) OER-Aktivitäten von Cu-α-MnO₂/Carbon, kommerziellem Pt/C-Ir/C und Cu-α-MnO₂/Carbon/NiFe-LDH nach elektrochemischer Belastung. Die Stabilität des Übergangsmetallkatalysators übertrifft die Stabilität des kommerziellen Edelmetall-Referenzkatalysators. Zudem zeigt sich in einem einfachem Vergleich, dass NiFe-LDH die Stabilität des erfindungsgemäßen Drei-Komponenten-Katalysators erheblich verbessert. Während die Aktivität des NiFe-LDH freiem Cu-α-MnO₂/Carbon drastisch abnimmt, ist die Aktivität des NiFe-LDH haltigem Systems weniger stark beeinflusst. Daher wird von einer abschirmenden Wirkung von NiFe-LDH ausgegangen.

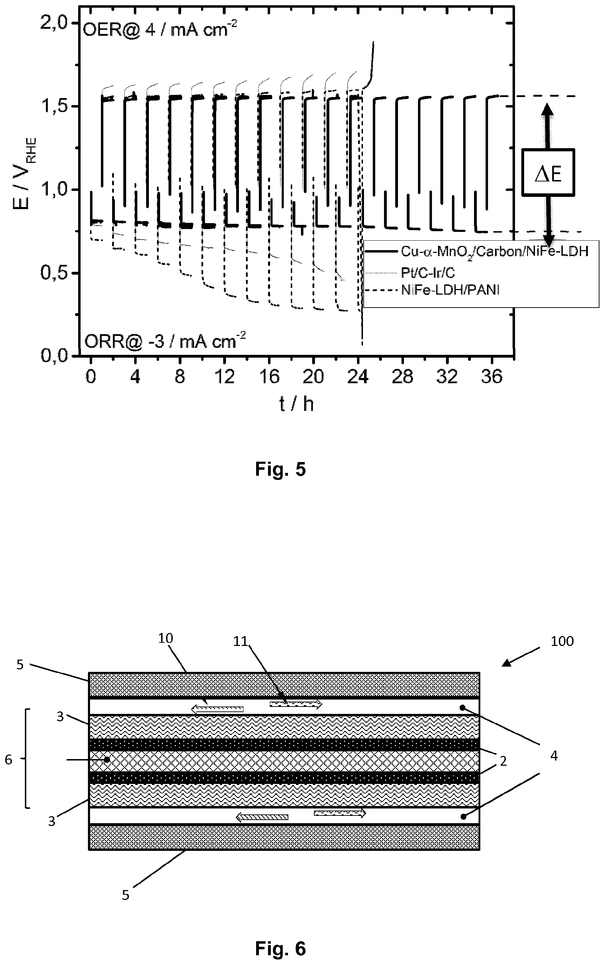

Figur 5 zeigt eine graphische Darstellung galvanostatischer Stabilitätsmessungen an einer rotierenden Scheibenelektrode in einer sauerstoffgesättigtem 0,1 M KOH Lösung des vorgestellten Cu-α-MnO₂/Carbon/NiFe-LDH, einem kommerziellem Referenzkatalysator und einem Übergangsmetallbasiertem Vergleichssystem (Daten von NiFe-LDH/PANI aus Referenz). Der Strom wurde für die Sauerstoffreduktions-Reaktion konstant bei -3 mA cm⁻² und für die Sauerstoff-Evolutionsreaktion konstant bei 4 mA cm⁻² gehalten. Im Gegensatz zum Übergangsmetallbasiertem Vergleichssystem und dem auf Edelmetall basierendem Referenzkatalysator bleibt die Gesamtaktivität über mehr als 18 Zyklen alternierenden OER- und ORR-Potentialzyklen stabil erhalten.

Eine schematische Schnittansicht einer Einzelzelle einer insgesamt mit 100 bezeichneten PEM-Brennstoffzelle ist in Figur 6 zur Erläuterung des Aufbaus und ihrer Wirkungsweise dargestellt.

Die Brennstoffzelle 100 umfasst als Kernkomponente eine Membran-Elektroden-Einheit 6, welche vorliegend bevorzugt eine lonenaustauschmembran 1 aufweist sowie jeweils eine, an eine der beiden Flachseiten der Membran 1 anschließende Elektrode 2, nämlich eine Anode sowie eine Kathode. Bei der lonenaustauschmembran 1 kann es sich um eine Polymerelektrolytmembran, bevorzugt Anionenaustauschmembran, beispielsweise Tokuyama A201, Selemion, Fumasep handeln, welche (selektiv) eine lonendiffusion vom Anodenraum in den Kathodenraum oder umgekehrt zulässt. Die Elektroden 2 umfassen ein katalytisches Material, das auf einem elektrisch leitfähigen Material, beispielsweise einem kohlenstoffbasierten Material, geträgert vorliegen kann.

An die Elektroden 2 schließt jeweils eine Gasdiffusionsschicht 3 an, der im Wesentlichen die Aufgabe einer gleichmäßigen Verteilung der zugeführten Betriebsgase über die Hauptflächen der Elektroden 2, beziehungsweise der Membran 1, zukommt.

An den Außenseiten jeder Gasdiffusionsschicht 3 ist eine Bipolarplatte 5 angeordnet. Bipolarplatten haben die Aufgabe, die einzelnen Membran-Elektroden-Einheiten 6 der Einzelzellen im Stapel elektrisch miteinander zu verschalten, den Brennstoffzellenstapel zu kühlen sowie die Betriebsgase den Elektroden 2 zuzuführen. Zu letzterem Zweck weisen die Bipolarplatten 5 (auch Flussfeldplatten genannt) Flussfelder 4 auf. Die Flussfelder 4 umfassen beispielsweise eine Vielzahl parallel zueinander angeordneter Strömungskanäle, die in Form von Rinnen oder Nuten in die Platten 5 eingearbeitet sind. Üblicherweise weist jede Bipolarplatte auf ihrer einen Seite ein Anodenflussfeld auf, das der Anode 2 zugewandt ist, und auf ihrer anderen Seite ein der Kathode zugewandtes Kathodenflussfeld. Vorliegend ist für jede der zwei dargestellten Bipolarplatten 5 jeweils nur ein Flussfeld 4 abgebildet.

Im Betrieb als Brennstoffzelle wird dem Anodenflussfeld ein Brennstoff, insbesondere Wasserstoff (H₂) zugeführt, während dem Kathodenflussfeld ein Sauerstoff (O₂) enthaltenes Betriebsmittel, insbesondere Luft zugeführt wird.

Im Betrieb als reversible Brennstoffzelle ändert sich die Funktion der Flussfelder, das Anodenfeld wird zum Kathodenfeld und umgekehrt. Daher ist es zweckmäßiger, die Elektroden als Sauerstoffelektrode und Wasserstoffelektrode zu bezeichnen. Dabei finden an der Sauerstoffelektrode die Reaktionen unter Beteiligung von Sauerstoff, also die Sauerstoffreduktions- und die Sauerstofferzeugungsreaktion statt. An der Wasserstoffelektrode hingegen finden die Wasserstofferzeugungs- und Wasserstoffoxidationsreaktion statt.

Da die an der Wasserstoffelektrode stattfindenden Reaktionen weniger komplex und leichter zu katalysieren sind, ist das erfindungsgemäße Katalysatormaterial bevorzugt auf der Sauerstoffelektrode angeordnet.

Die an den Elektroden stattfindenden Reaktionen sind in Figur 1 nicht dargestellt. Die an der Oberfläche der jeweiligen Elektrode katalysierten Elektroden setzen Ionen frei, welche dann durch die Membran 1 migrieren. Im Falle einer Brennstoffzellenreaktion bedeutet das, dass an der Sauerstoffelektrode eine katalytische Reduktion von Sauerstoff O₂ in Hydroxidionen OH⁻ unter Aufnahme von Elektronen statt. Die Hydroxidionen migrieren durch die Anionen leitende Membran 1 und erreichen die Wasserstoffelektrode. Dort reagiert der zugeführte Wasserstoff H₂ mit den Hydroxidionen OH⁻ zu Wasser H₂O, wobei der Wasserstoff oxidiert wird und somit Elektronen abgibt. Die Elektronen der Wasserstoffelektrodenreaktion werden über einen äußeren, hier nicht dargestellten Stromkreis den Sauerstoffelektroden zugeführt. Aus Figur 1 ist ersichtlich, dass das Produktwasser der Brennstoffzelle 100 auf der Sauerstoffelektrodenseite der Membran 5 anfällt.

Das katalytisch beschichtete Substrat, welches als Elektrode wirkt, umfasst ein Substrat sowie eine darauf aufgebrachte Katalysatorschicht gemäß der vorliegenden Erfindung. Die Katalysatorschicht kann als Sauerstoffelektrode in einer Brennstoffzelle fungieren. Das Substrat kann eine Membran oder eine Gasdiffusionsschicht sein. In der hier dargestellten Ausführungsform handelt es sich bei dem Substrat um eine Membran. Bei der Membran kann es sich prinzipiell um eine beliebige, in der Brennstoffzellentechnik verwendete lonenaustauschermembran handeln. Hierzu zählen etwa Polymerelektrolytmembrane, deren elektrolytische Leitfähigkeit auf ihrer Befeuchtung mit Wasser beruht (z. B. Nafion®), oder solche, die ihre Leitfähigkeit einer an das Polymermaterial gebundenen Säure oder im Falle von Anionenaustauschmembran von dessen quaternärem Amin verdanken, beispielsweise mit Trimethylammonium gedopten Polysulfon, sodass quaternäre Benzyltrimethylammonium Gruppen entstehen.

Die Katalysatorschicht setzt sich zumindest aus einem Katalysatormaterial zusammen, welches auf einem Trägermaterial angeordnet ist. Ferner kann sie ein Lösungsmittel, einen Elektrolyten und/oder einen Elektronenleiter umfassen.

Das Trägermaterial fungiert als Elektronenleiter. Im Allgemeinen handelt es sich bei dem Elektronenleiter um elektrisch leitfähige Kohlenstoffpartikel. Als elektrisch leitfähige Kohlenstoffpartikel können alle auf dem Gebiet der Brennstoff- beziehungsweise Elektrolysezellen bekannten Kohlenstoffmaterialien mit hoher elektrischer Leitfähigkeit und großer Oberfläche eingesetzt werden. Die Oberfläche beträgt beispielsweise 50 bis 200 m²/g. Bevorzugt werden Ruße, Graphit oder Aktivkohlen verwendet. Ganz besonders bevorzugt sind Ruße mit hoher Leitfähigkeit, sogenannte Leitfähigkeitsruße. Darüber hinaus kann Kohlenstoff auch in anderen Modifikationen, beispielsweise in granularer Form oder als sogenannte Nanotubes eingesetzt werden.

Die bevorzugte Ausführungsform des erfindungsgemäßen Katalysatormaterials stellt ein neuartiges Katalysatorsystem zur Verfügung, das als bifunktionelle Sauerstoffelektrode in Unitized Regenerative Fuel Cells (URFC) und Metallluftbatterien eingesetzt werden kann. Das Katalysatorsystem umfasst ein physikalisches Gemisch aus getrennt synthetisiertem NiFe-Schicht-Doppelhydroxid (NiFe-LDH), M-dotiertem alpha-MnO₂ (M-α-MnO₂) und zusätzlichem Kohlenstoffträger.

Insbesondere M-α-MnO₂ (M = Nickel, Kupfer, Silber oder Kobalt) ist die für ORR katalytisch wirkende Komponente. Der Anteil (Gewichtsbasis) des Dotierstoffes in M-α-MnO₂ liegt bevorzugt bei 0,2 Gew.-%, bis zu 2,2 Gew. %. α-MnO₂ kristallisiert in der Kryptomelanstruktur, die von den Dotierstoffen nicht beeinflusst wird, wie Figur 1 zeigt. Als Trägermaterial wird bevorzugt handelsüblicher "Carbon Black", beispielsweise Vulcan XC-72R® verwendet.

Die für die Oxidation von Wasser aktive Komponente ist eine Interkallationsverbindung, bevorzugt NiFe-LDH. Das molare Verhältnis zwischen Nickel und Eisen liegt dabei zwischen 5 : 1 bis 3 : 1. Um den Elektrokatalysator zu erhalten, der in der Lage ist, die genannten Reaktionen zu katalysieren, werden die verschiedenen Komponenten physikalisch durch Ultraschall vermischt. Dazu wird eine Suspension hergestellt, die beide Elektrokatalysatoren, das Trägermaterial, hochreines Wasser (beispielsweise mittels Mili-Q erhalten), *iso*-Propanol und das Bindemittel enthält. Das Verhältnis (Gewichtsbasis) zwischen Mili-Q, *iso*-Propanol und Bindemittel beträgt im Falle einer langsamen Auftragung auf ein Substrat bevorzugt 76,8 Gew.-%: 20,0 Gew.-%: 3,2 Gew.-%. Die Gesamtkonzentration der Feststoffe kann hier im Bereich von 3,5 mg L⁻¹ bis 5 mg L⁻¹ liegen. Im Falle einer schnellen Auftragung liegen Wasser und iso-Propanol bevorzugt mit 2 Gew.-% und 98 Gew.-% vor. Feststoff und Bindemittel liegen dann bevorzugt in einem Verhältnis von 7 : 3 in dem Lösungsmittelgemisch vor. Die Gesamtmasse des Feststoffs kann hier in einem Bereich von 15000 mg L⁻¹ bis 22000 mg L⁻¹ liegen. Das verwendete Bindemittel ist ein perfluoriertes Sulfonsäurepolymer wie Nafion® oder Polysulfon, welches quaternäre Benzyltrimethylammonium-Gruppen enthält.

α-MnO₂ allein ist kein ausreichend aktiver und stabiler Katalysator für die ORR. Das Aufbringen von α-MnO₂ auf Kohlenstoff, insbesondere Vulcan XC-72R und die Dotierung von α-MnO₂ , insbesondere mit Kupfer liefert ein Material, das ein konkurrenzfähiger ORR-Katalysator ist. NiFe-LDH ist ein sehr aktiver und stabiler OER-Katalysator. Andere Materialien auf der Basis von Übergangsmetallen, die in der Lage sind, OER mit der gleichen Aktivität wie NiFe-LDH zu katalysieren, sind Nickel- oder Vanadium-dotierte Cobaltferrite (Coₓ(Ni/V)₃Fe₂O₄). Der vorliegende Elektrokatalysator bietet gegenüber anderen bifunktionellen Systemen mehrere Vorteile. Es ist ein sehr kosteneffizientes System, verglichen mit Elektrokatalysatoren auf der Basis von Edelmetallen wie Pt/C-Ir/C, die ähnliche OER- und ORR-Aktivitäten erzielen. Im Vergleich zu anderen ORR-Katalysatoren auf der Basis von Übergangsmetallen und Kohlenstoffmaterialien ist die Synthese der ORR-aktiven Komponente einfach, schnell, energieeffizient und leicht skalierbar. Der größte Vorteil des hier vorgestellten Dreikomponenten-Systems ist die außerordentliche Stabilität. Während die Aktivität von Systemen wie NiFe-LDH/PANI oder Pt/C-Ir/C während andauernder elektrochemischer Belastung signifikant abnimmt, bleibt die Aktivität des erfindungsgemäßen Katalysatormaterials trotz der Kohlenstoffkomponente intakt (Figur 4).

Die Mischung aus M-α-MnO₂, NiFe-LDH und Trägermaterial in der bevorzugten Zusammensetzung liefert einen kostengünstigen und wettbewerbsfähigen Elektrokatalysator, der gleichzeitig für OER und ORR aktiv ist. Während die elektrochemische Spaltung von Wasser durch NiFe-LDH katalysiert wird, wird die Sauerstoffreduktion durch das kohlenstoffgeträgerte M-α-MnO₂ katalysiert. Dabei sind die genannten Komponenten jeweils nur für OER oder ORR aktiv, nicht aber für beide Reaktionen.

Im folgenden sind Beispiele zur Darstellung des erfindungsgemäßen Katalysatormaterials angegeben.

### Beispiel 1:

α-MnO₂ wurde nach einem Top-Down-Ansatz synthetisiert, der von Ding et. al. (Y. Ding, X. Shen, S. Gomez, R. Kumar, V. M. B. Crisostomo, S. L. Suib and M. Aindow, Chem. Mater., 2005, 17, 5382-5389) beschrieben wurde. Zur Bestimmung des optimalen Dotierstoffes für α-MnO₂ wurden kleine Mengen Kobalt, Kupfer, Silber, Nickel und ein Gemisch aus Kobalt und Kupfer der genannten Synthese zugesetzt und anschließend hinsichtlich der ORR-Aktivität getestet. Der erhaltene Anteil des Dotierstoffes lag zwischen 0,2 Gew.-% (Silber) und 2,25 Gew.-% (Kupfer plus Kobalt). Die Kristallstruktur des Katalysators wird durch die verschiedenen Dotierstoffe nicht beeinflusst (Figur 1a)).

Die zweite Komponente, NiFe-LDH, wurde unter Verwendung einer mikrowellenunterstützten Synthese hergestellt, wobei eine Mischung aus Fe(NO)₃ x 9 H₂O und Ni(OAc)₂ x 4 H₂O in DMF/H₂O gelöst wurde und nach einer Vorschrift von Dresp et. al (S. Dresp, F. Luo, R. Schmack, S. Kühl, M. Gliech and P. Strasser, Energy Environ. Sc., 2016, 9, 2020-2024) umgesetzt wurde.

### Beispiel 2:

Zur Bestimmung der ORR- und OER-Aktivitäten der reinen und der gemischten Komponenten wurde ein Drei-Elektroden-RDE-Aufbau mit einem Platinnetz als Gegenelektrode, einer reversiblen Wasserstoffelektrode (RHE) als Referenzelektrode und einer glasartigen Kohlenstoffscheibe, die mit dem Katalysator als Arbeitselektrode beschichtet ist, verwendet. Wie in Figur 2) dargestellt, ist das Kupfer dotierte Manganoxid (Cu- α-MnO₂) das aktivste Katalysatormaterial hinsichtlich ORR dieser Reihe. Die elektrokatalytischen Aktivitäten des Dreikomponenten-Katalysators wurden auf die gleiche Weise bestimmt. In Figur 3 a) und b) sind die elektrochemischen Aktivitäten des Dreikomponenten-Katalysatorsystems hinsichtlich ORR sowie OER dargestellt. Die Potentialdifferenz zwischen -3 mA cm⁻² (ORR) und 10 mA cm⁻² resultiert in einem Gesamtüberpotential von 0,7086 V ± 0,0011 V.

### Beispiel 3:

Die wichtigste Errungenschaft des Katalysatormaterials stellt die Langzeitstabilität dar, die ebenfalls in einem Dreielektroden-RDE-Messaufbau evaluiert wurde. Die galvanostatische Messung wurde bei einer konstanten Stromdichte von 4mA cm⁻² für OER und -3 mA cm⁻² für ORR durchgeführt. Zwischen ORR und ORR relevanter Stromdichte wurde stündlich gewechselt. Die Ergebnisse der Stabilitätstestung sind in Figur 5 dargestellt.

### Bezugszeichenliste

- 100: kombinierte Brennstoffzelle
- 1: Membran
- 2: Elektrode
- 3: Gasdiffusionsschicht - GDL
- 4: Flussfeld
- 5: Bipolarplatte - BPP
- 6: Membran-Elektroden-Einheit - MEA

- 10: Flussrichtung Betrieb Brennstoffzelle
- 11: Flussrichtung Betrieb reversible Brennstoffzelle

## Patentansprüche

1. Katalysatormaterial für eine Brennstoffzelle, umfassend ein Mehrkomponentensystem aufweisend ein mit einem Dotanden M dotiertes Übergangsmetalloxid, eine NiFe-Interkalationsverbindung, welche mittelbar oder unmittelbar in einem leitfähigen kohlenstoffhaltigen Trägermaterial angeordnet sind.

2. Katalysatormaterial nach Anspruch 1, **dadurch gekennzeichnet, dass** das dotierte Übergangsmetalloxid ein mit einem Dotanden M dotiertes Manganoxid, insbesondere ein im Cryptomelan-Typ vorliegendes Mangandioxid entsprechend der Formel M:α-MnO₂ ist.

3. Katalysatormaterial nach einem der vorhergehenden Ansprüche, **dadurch gekennzeichnet, dass** der Dotand M ausgewählt ist aus der Gruppe Nickel, Kupfer, Silber und/oder Kobalt.

4. Katalysatormaterial nach einem der vorhergehenden Ansprüche, **dadurch gekennzeichnet, dass** der Dotand M zu einem Anteil im Bereich von 0,1 bis 2,5 Gew.-%, insbesondere im Bereich von 0,2 bis 2,25 Gew.-%, im Übergangsmetalloxid enthalten ist.

5. Katalysatormaterial nach einem der vorhergehenden Ansprüche, **dadurch gekennzeichnet, dass** die NiFe-Interkalationsverbindung ein NiFe-LDH, insbesondere mit einem 3-fachen bis 5-fachen Gewichtsanteil an Nickel bezogen auf Eisen, ist.

6. Katalysatormaterial nach einem der vorhergehenden Ansprüche, **dadurch gekennzeichnet, dass** das leitfähige Trägermaterial auszuwählen ist aus Ruß, Graphen, nanostrukturiertem Kohlenstoff, Kohlenstoffnanoröhrchen und/oder einem carbonisiertem Trägerpartikel.

7. Elektrode, insbesondere Sauerstoffelektrode für eine Brennstoffzelle, aufweisend ein Katalysatormaterial nach einem der vorhergehenden Ansprüche.

8. Brennstoffzelle, Elektrolyseur, regenerative Brennstoffzelle bzw. reversiblen Elektrolyseur aufweisend eine lonenaustauschmembran, die zumindest einseitig mit einem Katalysatormaterial nach einem der Ansprüche 1 bis 6 beschichtet ist.

9. Verfahren zum Herstellen eines Katalysatormaterials nach einem der Ansprüche 1 bis 6, umfassend die folgenden Schritte in der angegebenen Reihenfolge;
- Bereiten einer Mischung aus einem dotierten Manganoxid, einer NiFe-Interkalationsverbindung sowie einem leitfähigen kohlenstoffhaltigen Trägermaterial durch Vermengen
- Bereiten einer Katalysatordispersion aus der Mischung durch Zugabe von hochreinem Wasser, *iso*-Propanol und optional einem Bindemittel
- Auftragen der Katalysatordispersion auf ein Substrat.

10. Verfahren nach Anspruch 9, **dadurch gekennzeichnet, dass** Wasser 70 bis 80 Gewichtsanteile, *iso*-Propanol 15 bis 25 Gewichtsanteile und Bindemittel 2 bis 5 Gewichtsanteile bezogen auf die Summe der Komponenten Wasser, *iso*-Propanol und Bindemittel aufweisen oder Wasser 0.5 bis 5 Gewichtsanteile, *iso*-Propanol 95 bis 98.5 Gewichtsanteile bezogen auf die Summe der Komponenten Wasser und *iso*-Propanol aufweisen und Feststoff und Bindemittel in einem Verhältnis von 5 : 3 bis 7 : 3 in dem zuletzt genannten Wasser/ *iso*-Propanol Gemisch vorliegen.

11. Verfahren nach einem der Ansprüche 9 und 10, **dadurch gekennzeichnet, dass** das Bindemittel ein perfluoriertes Sulfonsäurepolymer und/oder eine quaternäre AmmoniumVerbindung, insbesondere ein gedoptes Polysulfon ist.

12. Verfahren nach einem der Ansprüche 9 bis 11, **dadurch gekennzeichnet, dass** das Substrat eine Gasdiffusionsschicht oder eine Membran, insbesondere eine lonenaustauschmembran ist.
